## Europäisches Patentamt

## European Patent Office

## Office européen des brevets

(19)

(11) Publication number: **0 245 620**

**A2**

(12) # EUROPEAN PATENT APPLICATION

(21) Application number: **87104018.4**

(51) Int. Cl.⁴: **H04B 11/00 , E21F 17/00**

(22) Date of filing: **18.03.87**

The title of the invention has been amended (Guidelines for Examination in the EPO, A-III, 7.3).

(30) Priority: **18.03.86 PL 258466**
       **22.12.86 PL 263168**

(43) Date of publication of application:
     **19.11.87 Bulletin 87/47**

(84) Designated Contracting States:
     **BE DE FR GB**

(71) Applicant: **Centralna Stacja Ratownictwa**
     **ul. Chorzowska 25**
     **PL-41-902 Bytom(PL)**

(72) Inventor: **Czarnecki, Zenon**
     **ul. Wladyslawa IV 23/41**
     **PL-81-358 Gdynia(PL)**
     Inventor: **Rybarski, Leslaw**
     **ul. Anielewicza 28/21**
     **PL-01-052 Warszawa(PL)**
     Inventor: **Owiek, Bogdan**
     **ul. Szeroki Lan 15/5**
     **P-41-200 Sosnowiec(PL)**
     Inventor: **Wojciechowski, Wieslaw**
     **ul. Admiralska 3/1**
     **PL-00-910 Warszawa Rembertow(PL)**
     Inventor: **Czarnecka, Zdzislawa**
     **ul. Wladyslawa IV 23/41**
     **PL-81-358 Gdynia(PL)**
     Inventor: **Kwiatek, Jerzy**
     **ul. Lubawska 11/51**
     **PL-81-066 Gdynia(PL)**
     Inventor: **Kolodziejski, Krystyn**
     **ul. Slupska 13/2**
     **PL-81-316 Gdynia(PL)**
     Inventor: **Poczesny, Tomasz**
     **ul. Golkowska 87b**
     **PL-05-502 Piaseczno(PL)**
     Inventor: **Kandzia, Antoni**
     **ul. Modrzejewskiej 2a**
     **PL-40-050 Katowice(PL)**
     Inventor: **Kroczek, Gerard**
     **ul. Zajaczka 16**
     **PL-40-050 Katowice(PL)**

(74) Representative: **Füchsle, Klaus, Dipl.-Ing. et al**
     **Hoffmann . Eitle & Partner Patentanwälte**
     **Arabellastrasse 4**
     **D-8000 München 81(DE)**

(54) **Procedure and apparatus for establishing an emergency contact in underground mines.**

(57) The subject matter of the invention is the manner of emergency communication in underground mines with the mine workmen that have been cut off from active workings. The essence of this procedure consists in that, that in order to establish phonic or telegraphic contact with the mine workmen cut off by

an obstacle from active workings a modulated sonic wave is utilized. The said wave is induced on one side of the converned obstacle in elements of a mine workings' equipment, in rock mass or in the concerned obstacle itself and is being received from the mentioned elements on the other side of the concerned obstacle.

Fig. 1

## The Procedure and Apparatus for Establishing Emergency Contact in Underground Mines

The subject matter of this invention is the procedure and apparatus for establishing emergency contact in underground mines with workmen that have been cut off, by an obstacle, from the active workings.

The extraction of useful minerals by underground methods is invariably connected with various hazards, which often create the situation that workmen find themselves cut off from active workings. Immediate establishment of contact with these workmen is of decisive importance for the final success of the rescue operations undertaken in order to save the concerned injured and trapped workmen.

Underground workings are equipped in the elements of metal supports, water pipelines, power and communication cables, rails for railroad transport, and in case of haulage roadways are equipped in electric traction leads and leads of return current.

The above mentioned elements of a mine workings', often retain their continuity even in the case of complex failures, that occur as the result of the hazard that had taken place. Roof rock falls, for instance, can create such a hazard or upheval of a working's floor in the result of rock bumps, or else collapse of a working and its filling with rock debris after a gas outburst, flooding of a working with water or hydraulic packing, hot and dense fumes that originate in the result of underground fires etc.

Up till present, in case the communication means existing in a mine workings were broken, what happens in the result of the above mentioned hazards occurrence, the workmen that had been cut off from active workings were totaly deprived of communication possibilities with those being on the other side of the concerned obstacle.

There exist, though, various forms of transmitting the alarm signals, among others knocking on the pipes, but every interval in the continuity of the pipeline or in case the pipeline had been covered with rock debris along the considerable distance, those mentioned alarm signals were efficiently attenuated. The mining localizing transmitter for remote determination of the trapped workmen's whereabouts is well known from the Polish People's Republic patent Nr. l277l8 description. The said transmitter, equipped in magnetic aerial, operates at such low frequencies, favourably below 8 kHz, as to induce electromagnetic induction field in the rock area medium of a dozen or so meters radius and of the magnitude of at least some times bigger than the radio wave radiation field. The transmitter induced induction field is located with the help of known location devices, elaborated for short zone operation. The said device enables to determine the location of the transmitter but does not provide any means for communication or transmitting of alarm signals.

Besides the distance range of the said device is not large and as a rule is limited to a dozen or so meters.

The trials of radio devices for establishing wireless communication in underground mines are also known, but because of great attenuation of radio waves, the application of these devices was abandoned after the trial period. The said attenuation is created by rock strata and equipment of mine workings, especially metal elements, which apart from what was said are the cause of origination of not precisely defined magnetic fields.

The aim of this invention is to improve the procedure of establishing contact via an obstacle in underground mines.

This target has been achieved utilizing the procedure as stated in the description of this invention. The essence of this procedure consists in establishing of phone or telegraphic contact with the workmen that have been cut off from active workings through a created obstacle utilizing the modulated sonic wave.

The said wave is being induced on one side of an obstacle in rock mass or in the elements of a working equipment and is being received, from the same mentioned elements, on the other side of the concerned obstacle.

To establish an emergency contact with the workmen cut off by an obstacle we can also utilize a non-modulated acoustic wave of a human voice frequency being introduced into an electroacoustic transmission channel, which may be any element of mine workings equipment, by a transducer.

Thus introduced wave is received on the other side of the obstacle, converted into an electric signal which is then amplified to the level indispensable for the receiver's adjustment.

. These procedures of establishing an emergency contact enable the rescue teams to communicate with the workmen that have been cut off from active workings, and especially in the cases, where all communication means have been destroyed or damaged by an obstacle and which had previously existed in the workings before an obstacle occurrence.

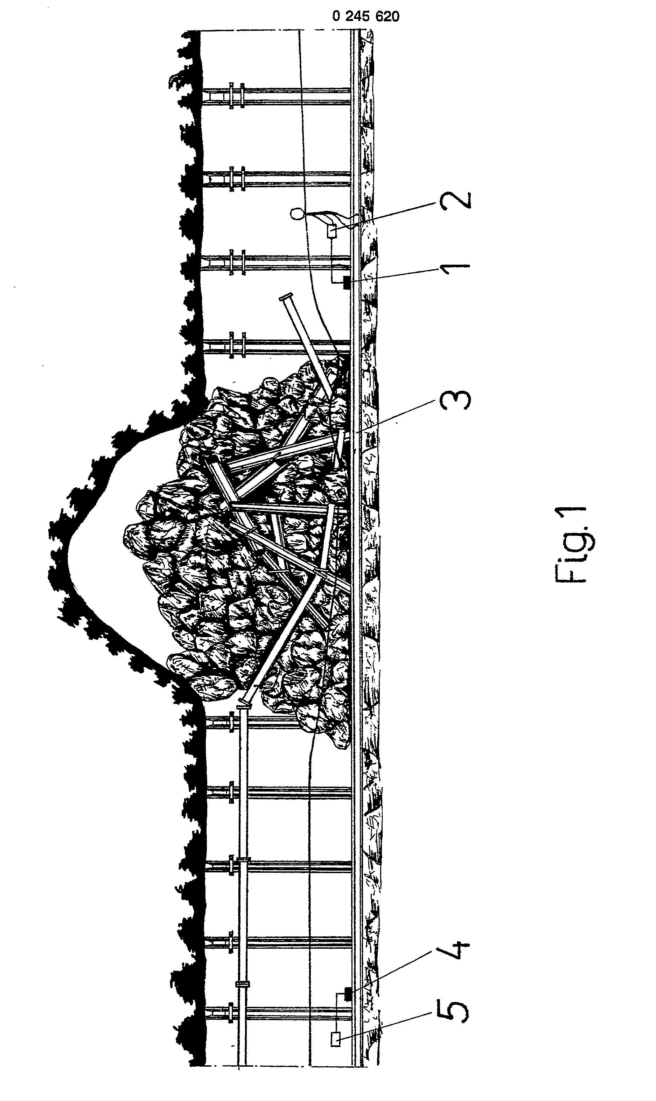

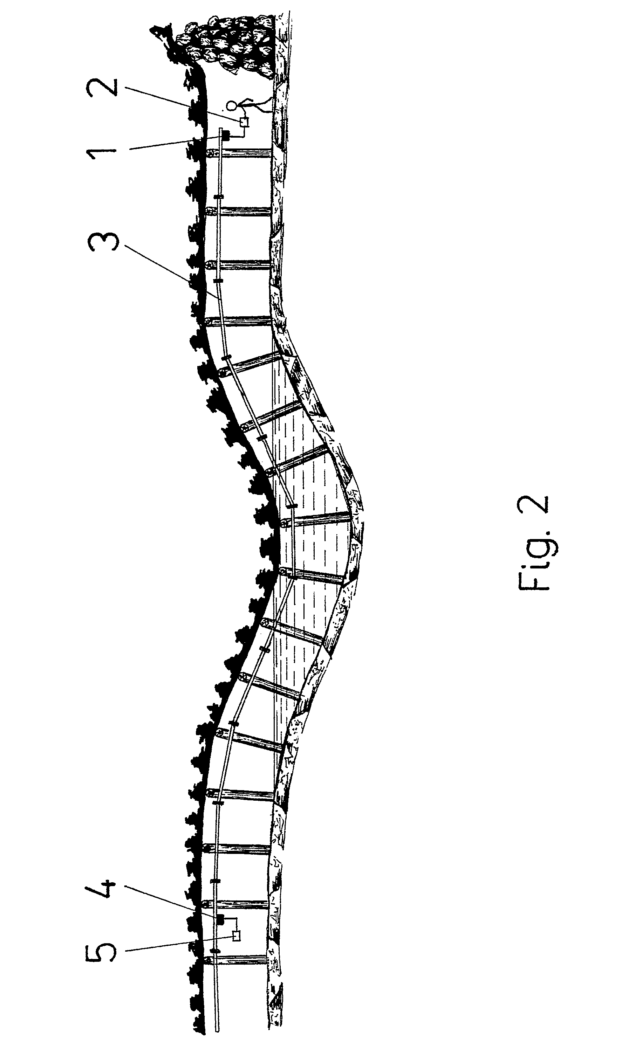

The subject of the invention concerned is more precisely explained in the enclosed figures. Fig. I presents a diagram of the contact establishing procedure in case where mine workmen had been cut off by a roof rock fall whereas Fig. 2 presents the same situation in case where the workmen had been cut off by water.

As presented in the mentioned figures establishing of an emergency contact via an obstacle with the cut off workmen is conducted - in accordance with the invention - as follows below:

Each obstacle separating the mine workmen from active workings and created by a rock fall, flooding of a working by water, formed by hot and dense fumes etc., possesses the elements of equipment which can constitute a transmission channel for establishing of phonic or telegraphic contact. The said elements may include, among others, rock mass, rails, pipes, steel ropes, conveyor's troughs, power cables and others.

When mine workmen happen to be cut off from active workings and when supplied with proper devices they can connect the electro-acoustic transducer I of the transmitter 2 to any of the elements of a transmission channel 3 and due to this device they can induce an acoustic wave in the said channel of a predetermined frequencies and adequate electric power creating the propagation of this wave in the whole induced transmission channel.

The call-signal is being transmitted so long as one hears the confirmation of the said signal by rescue teams. The rescue teams connect similiar electro-acoustic transducer 4 of the receiver 5 to the mentioned channel on the other side of the obstacle.

When connecting the transducer to the transmission channel 3 an electric signal on the transducer's clamps will occur, which after being properly amplified and processed, will be fed to earphones or a loudspeaker of the receiver 5.

If, in case of a particular obstacle, the cut off mine workmen have sevral transmission channels 3 at their disposal, they will select one of them and transmit the call signal along it until they receive confirmation their signal had been received. The rescue teams, on the other hand, must conduct their listening watch on any possible transmission channel, and only after hearing the call-signal they must determine, together with the affected men, on which channel the further communication will proceed. In such cases the affected mine workmen can also undertake trials to establish contact along any transmission channel available on their side.

Devices, being at the disposal of the affected mine workmen and rescue teams, will mke it possible for both the mentioned groups of people to communicate with phonic or telegraphic means taking advantage of the predetermined code.

**Claims**

I. A procedure for establishing emergency contact in underground mines between workmen, cut off by an osbstacle, from the active workings and mine rescue services,
characterized by:
inducing a modulated sonic wave on one side of said obstacle in the elements of a mines workings's equipment or in a rock mass or in the said obstacle, in that said wave is transmitted through these means in order to establish phonic or telegraphic contact with the said workmen or rescue workers on the other side of said obstacle.

2. A procedure of establishing an emergency contact according to claim I,
characterized in that the step of establishing said phonic or telegraphic contact includes utilizing a non-modulated acoustic wave being introduced by a transducer (I) to an electroacoustic transmission channel (3) on one side of said obstacle and received on other side of said obstacle by an electroacoustic transducer (4), converted into an electric signal and amplified to the level indispensable for the receiver's (5) adjustment.

3. A procedure of establishing an emergency contact according to claim 2,
characterized in that said non-modulated acoustic wave is of human voice frequency.

4. An apparatus for establishing emergency contact in underground mines between workmen. cut off by an obstacle, from the active workings and mine rescue services,
characterized by a first electroacoustic transducer (I) of a transmitter (2) connected to a transmission channel (3) on one side of said obstacle; a second electroacoustic transducer (4) of a receiver (5) connected to the said transmission channel (3) on the other side of said obstacle.

5. An apparatus for establishing an emergency contact according to claim 4,
characterized in that said transmission channel (3) is elements of a mine working's equipment or rock mass or the said obstacle.

6. An apparatus for establishing an emergency contact according to claim 4,
characterized in that said first electroacoustic transducer (I) of said transmitter (2) induces in said transmission channel (3) an acoustic wave of predetermined frequencies and adoquate electric power for propogation of said wave through said transmission channel (3).

Fig.1

0 245 620

Fig. 2

0 245 620